(19) Europäisches Patentamt
European Patent Office
Office européen des brevets

(11) **EP 2 781 427 B1**

(12) **FASCICULE DE BREVET EUROPEEN**

(45) Date de publication et mention de la délivrance du brevet:
**10.10.2018 Bulletin 2018/41**

(51) Int Cl.:
***B61K 3/02*** (2006.01)

(21) Numéro de dépôt: **14001023.2**

(22) Date de dépôt: **20.03.2014**

(54) **Système autonome de lubrification de boudin de roue de bogie de véhicule ferroviaire**

Autonomes Schmiersystem eines Spurkranzes des Fahrgestells eines Schienenfahrzeugs

Standalone system for lubricating the wheel flange of a rail vehicle bogie

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.03.2013 FR 1300667**

(43) Date de publication de la demande:
**24.09.2014 Bulletin 2014/39**

(73) Titulaire: **SNCF MOBILITES**
**93200 Saint-Denis (FR)**

(72) Inventeur: **Desbois, Michel**
**75000 Le Mans (FR)**

(74) Mandataire: **Delaveau, Sophie**
**Lexando & Caracteq**
**14, rue Rodier**
**75009 Paris (FR)**

(56) Documents cités:
**EP-A1- 0 274 568      EP-A1- 2 657 100**
**DE-C1- 19 731 870     GB-A- 1 311 293**
**US-A- 1 129 127**

**Description**

L'invention concerne principalement un système de lubrification embarqué permettant d'assurer la lubrification d'un boudin de roue de bogie.

L'invention porte également sur un procédé de lubrification de boudin de roue de bogie, sur un bogie équipé d'un tel système de lubrification et sur une structure de caisse de véhicule ferroviaire comportant au moins un tel bogie.

De façon connue, chaque structure de caisse de véhicule ferroviaire comporte un bogie avant et un bogie arrière montés mobiles par rapport au châssis de cette structure de caisse et pivotant indépendamment l'un de l'autre de façon à faciliter le passage en courbe du véhicule ferroviaire.

Les roues de chacun des essieux avant et arrière d'un bogie comportent une bande de roulement en contact avec la partie supérieure du rail qui transmet la puissance et assure la stabilité du véhicule ferroviaire, et un boudin de roue qui est en contact latéral avec les rails dans les courbes et assure le guidage.

Lorsqu'un véhicule ferroviaire circule dans une courbe, la force centrifuge tend à déplacer le bogie vers l'extérieur de la courbe, ce dont il résulte un effort latéral important au niveau de la zone de contact entre le rail et le boudin de la roue avant externe du bogie.

Sur le plan de la sécurité, cet effort latéral est l'une des causes majeures des déraillements à faible vitesse dans les courbes serrées par montée des roues sur le rail.

Sur un plan environnemental, cet effort latéral provoque des nuisances sonores en raison des crissements générés. Par ailleurs, le coefficient de frottement dynamique au niveau du plan supérieur du rail étant lié à l'effort latéral de la roue sur le rail, cette augmentation de l'effort latéral nécessite un effort de traction supplémentaire du véhicule ferroviaire, et donc une consommation d'énergie accrue.

Enfin, sur le plan de la maintenance, cet effort latéral est la cause principale de l'usure des boudins de roues et engendre également une usure excessive de la face intérieure du rail.

Il est connu de lubrifier les boudins de roue au moyen d'un bâton graisseur, mais ce système est peu efficace et très couteux.

Des systèmes de lubrification embarqués des boudins de roues par pulvérisation de lubrifiant sont également connus, mais ces systèmes nécessitent une alimentation énergétique de type pneumatique ou électrique, ce dont il résulte une perte d'énergie pour la traction et le freinage du véhicule ferroviaire.

Dans ce sens, la publication FR2938043 décrit un système de lubrification embarqué comportant une pompe électromagnétique et un bloc de chauffage du lubrifiant qui nécessitent tous les deux une alimentation électrique.

Plus particulièrement, sur du matériel de transport de marchandises, l'alimentation énergétique d'un système de lubrification embarqué est d'autant plus problématique que l'énergie disponible est de type pneumatique. Il en résulte que si une lubrification est nécessaire à plusieurs endroits en même temps, la quantité d'énergie sollicitée sera alors conséquente, et l'énergie pneumatique restante pour assurer la sécurité du convoi lors du freinage risque de ne plus être suffisante.

Dans ce contexte, la présente invention vise un système de lubrification embarqué de boudin de roue de bogie de véhicule ferroviaire ne nécessitant pas l'utilisation de l'énergie pneumatique ou électrique du convoi.

A cet effet, le système de lubrification embarqué de boudin de roue de bogie de véhicule ferroviaire comprenant des moyens de projection d'un lubrifiant sur au moins un boudin de roue est essentiellement caractérisé en ce que les dits moyens de projection sont reliés à au moins un réservoir d'air en communication avec un vérin pneumatique comportant une chambre avant et une chambre arrière et dont le déplacement du piston est généré par les mouvements relatifs de la structure de caisse du véhicule et du bogie monté sur le dit véhicule, lequel déplacement du piston engendre une alternance de phases de détente et de compression du vérin qui provoquent le remplissage du réservoir d'air, en ce qu'il comporte des moyens d'alimentation en air de la chambre avant du vérin et des moyens d'évacuation de l'air contenu dans la chambre arrière du vérin vers le dit réservoir, lesquels moyens d'alimentation et d'évacuation sont activés lorsque le vérin est en phase de compression, en ce qu'il comporte des moyens d'alimentation en air de la chambre arrière du vérin et des moyens d'évacuation de l'air contenu dans la chambre avant du vérin vers le dit réservoir, lesquels moyens d'alimentation et d'évacuation sont activés lorsque le vérin est en phase de détente, et en ce qu'une vanne est commandée en ouverture pour alimenter en air pressurisé les moyens de projection lorsqu'une pression seuil est atteinte dans le réservoir d'air.

Ainsi, le système de l'invention permet d'assurer la lubrification d'un boudin de roue de bogie sans utiliser l'énergie disponible sur le matériel ferroviaire, mais en convertissant en énergie les mouvements et déplacements qui ont lieu entre la structure du matériel et le bogie lors de l'exploitation du matériel.

Le système de lubrification de l'invention peut également comporter les caractéristiques optionnelles suivantes considérées isolément ou selon toutes les combinaisons techniques possibles :

- dans le système de l'invention :

- les moyens d'alimentation en air de la chambre avant du vérin comportent un clapet anti-retour par lequel de l'air est introduit automatiquement dans la chambre avant du vérin lorsque le vérin est en phase de compression, et qui interdit l'évacuation de l'air contenue dans la chambre avant vers l'extérieur lorsque le vérin est en phase de détente,
- les moyens d'alimentation en air de la chambre arrière du vérin comportent un clapet anti-retour par lequel de l'air est introduit automatiquement dans la chambre arrière du vérin lorsque le vérin est en phase de détente, et qui interdit l'évacuation de l'air contenue dans la chambre arrière vers l'extérieur lorsque le vérin est en phase de compression,
- les moyens d'évacuation de l'air contenu dans la chambre arrière comportent un clapet anti-retour par lequel l'air contenu dans la chambre arrière est automatiquement évacué vers le réservoir lorsque le vérin est en phase de compression, et qui interdit l'entrée de l'air du réservoir dans la chambre arrière lorsque le vérin est en phase de détente, et
- les moyens d'évacuation de l'air contenu dans la chambre avant comportent un clapet anti-retour par lequel l'air contenu dans la chambre avant est automatiquement évacué vers le réservoir lorsque le vérin est en phase de détente, et qui interdit l'entrée de l'air du réservoir dans la chambre avant lorsque le vérin est en phase de compression.
- le piston est guidé en coulissement dans le vérin par une tige de guidage dont le diamètre est évalué selon principalement la longueur de la tige de guidage qui résulte de l'implantation du vérin sur la caisse du véhicule ferroviaire, le matériau constitutif de la tige de guidage et l'effort de rotation auquel est soumis la tige de guidage.
- le diamètre de la tige de guidage est supérieur ou égal à 5 millimètres.
- le diamètre intérieur du tube du vérin correspondant au diamètre du piston est au moins 1,5 fois supérieur au diamètre de la tige de guidage.
- le diamètre de la tige de guidage est de 20 millimètres, et le diamètre intérieur du tube du vérin est de 80 millimètres.
- le vérin est solidarisé d'une part au bogie du véhicule par l'extrémité libre de la tige de guidage du piston du vérin ou par le tube du vérin, et d'autre part à la structure de caisse du véhicule par le tube du vérin ou par l'extrémité libre de la tige de guidage du piston du vérin.

L'invention porte également sur un procédé de lubrification de boudin de roue de bogie de véhicule ferroviaire qui est essentiellement caractérisé en ce qu'il comprend au moins les étapes :

- d'alimentation en air d'un réservoir d'air au moyen d'un vérin pneumatique dont le déplacement du piston est généré par les mouvements relatifs de la structure de caisse du véhicule et du bogie monté sur le dit véhicule, cette alimentation en air du réservoir d'air étant alternativement réalisée par :

  - l'alimentation en air de la chambre avant du vérin et l'évacuation concomitante de l'air contenu dans la chambre arrière du vérin vers le réservoir d'air lorsque le vérin est en phase de compression,
  - l'alimentation en air de la chambre arrière du vérin et l'évacuation concomitante de l'air contenu dans la chambre avant du vérin vers le réservoir d'air lorsque le vérin est en phase de détente.

- d'ouverture de la vanne lorsqu'une pression seuil est atteinte dans le réservoir d'air et d'alimentation concomitante en air pressurisée de moyens de projection d'un lubrifiant sur au moins un boudin de roue.

L'invention porte en outre sur un bogie de véhicule ferroviaire comportant un essieu arrière et un essieu avant, et qui est essentiellement caractérisé en ce qu'il comporte au moins un système de lubrification tel que précédemment défini équipé de deux éjecteurs de lubrifiant et pour lequel une première extrémité du vérin est solidarisée au bogie au dessus d'une roue d'un premier essieu avant ou arrière au niveau de la partie d'extrémité avant ou arrière de ce bogie, l'extrémité opposée du vérin étant solidarisée à la structure de caisse du véhicule ferroviaire, et en ce que les deux éjecteurs sont respectivement orientés vers les boudins de roues droit et gauche du second essieu avant ou arrière.

L'invention porte enfin sur un véhicule ferroviaire comportant au moins une structure de caisse telle qu'une voiture, une remorque ou un wagon, et qui est essentiellement caractérisé en ce que la dite structure de caisse comprend un bogie avant et un bogie arrière, et en ce qu'au moins le bogie avant ou le bogie arrière est tel que précédemment défini.

D'autres caractéristiques et avantages de l'invention ressortiront clairement de la description qui en est donnée ci-dessous, à titre indicatif et nullement limitatif, en référence aux figures annexées parmi lesquelles :

- la figure 1 est une représentation schématique du système de lubrification de l'invention,
- la figure 2 est une représentation schématique du vérin du système de lubrification de l'invention illustré en phase de compression,

- la figure 3 est une représentation schématique du vérin du système de lubrification de l'invention illustrée en phase de détente,
- la figure 4 est une représentation schématique de dessus d'un bogie sur lequel sont représentés le vérin et les deux éjecteurs du système de lubrification de l'invention,
- la figure 5 est une représentation schématique de dessus d'une structure de caisse de véhicule ferroviaire de l'invention, illustrée en transparence, en place sur des rails en ligne droite,
- la figure 6 une représentation schématique de dessus d'une structure de caisse de véhicule ferroviaire de l'invention, illustrée en transparence, circulant dans une courbe à gauche, et
- la figure 7 une représentation schématique de dessus d'une structure de caisse de véhicule ferroviaire de l'invention, illustrée en transparence, circulant dans une courbe à droite.

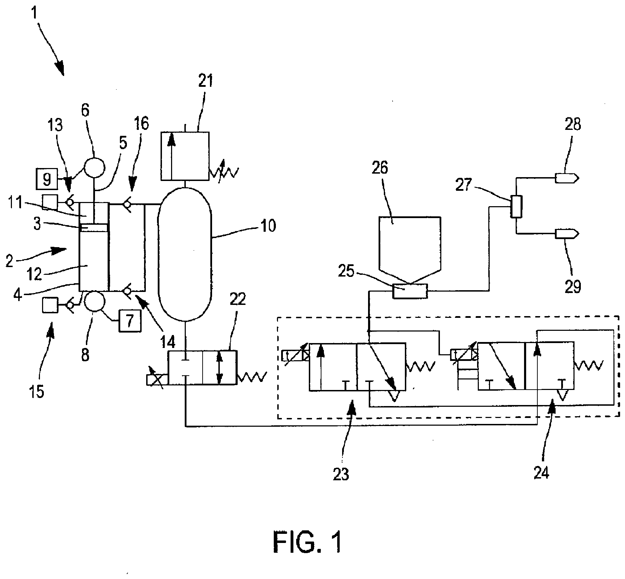

En référence à la figure 1, le système de lubrification de l'invention 1 comprend un vérin pneumatique 2 comportant un piston 3 guidé en coulissement dans un tube 4 par une tige de guidage 5. Comme représenté sur cette figure, si l'extrémité libre 6 de la tige 5 est solidarisée à un bogie 9, alors l'extrémité opposée 8 du tube 4 est solidarisée à la structure de caisse 7 du véhicule ferroviaire non visible sur cette figure. La solidarisation inverse de l'extrémité libre 6 de fa tige 5 à la structure de caisse 7 du véhicule ferroviaire et de l'extrémité opposée 8 du tube 4 avec le bogie 9 est aussi possible selon l'invention.

Ainsi, les mouvements relatifs du bogie 9 et de la structure de caisse du véhicule 7 vont entrainer le piston 3 du vérin 2 en mouvement, soit en détente, soit en compression. Selon l'invention, les mouvements du piston 3 vont permettre d'alimenter en air un réservoir 10 qui est relié au vérin 2 au niveau de sa chambre avant 11 qui comporte la tige 5 et au niveau de sa chambre arrière 12.

De façon avantageuse, l'alimentation en air du réservoir 10 s'effectue à la fois quand le vérin 2 est en phase de compression et en phase de détente.

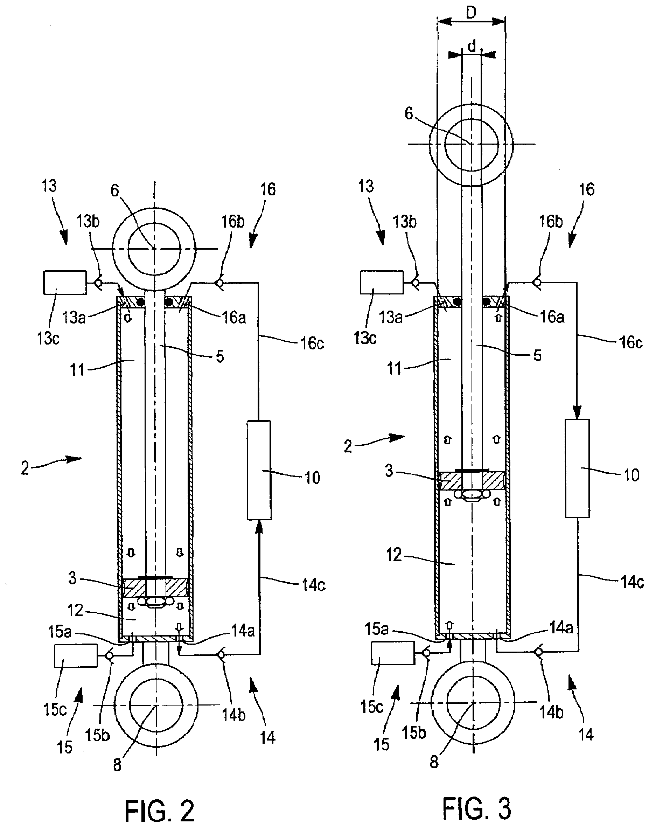

Pour ce faire, des moyens d'alimentation en air 13 de la chambre avant 11 du vérin 2 et des moyens d'évacuation 14 de l'air contenu dans la chambre arrière 12 sont activés de façon concomitante lorsque le vérin 2 est en phase de compression (figure 2) de façon à alimenter en air le réservoir 10 et à remplir simultanément d'air la chambre avant 11 du vérin.

A l'inverse, des moyens d'alimentation en air 15 de la chambre arrière 12 du vérin 2 et des moyens d'évacuation 16 de l'air contenu dans la chambre avant 11 sont activés de façon concomitante lorsque le vérin 2 est en phase de détente (figure 3) de façon à alimenter en air le réservoir 10 et à remplir simultanément d'air la chambre arrière 12 du vérin.

Plus précisément et en référence à la figure 2, les moyens d'alimentation en air 13 de la chambre avant 11 comportent une entrée d'air 13a ménagée dans la partie supérieure de la chambre avant 11 et un clapet anti-retour 13b qui se positionne en ouverture automatique pour faire entrer l'air extérieur 13c dans la chambre avant 11 sous l'effet de la dépression créée dans cette chambre avant 11 lorsque le vérin est en phase de compression.

Les moyens d'évacuation 14 de l'air de la chambre arrière 12 vers le réservoir 10 comportent une sortie d'air 14a ménagée dans la partie inférieure de la chambre arrière 12 et un clapet anti-retour 14b qui se positionne en position d'ouverture automatique pour évacuer l'air de la chambre arrière 12 dans un conduit 14c débouchant dans le réservoir 10 sous l'effet de la surpression créée dans cette chambre arrière 12 lorsque le vérin est en phase de compression.

De façon analogue et en référence à la figure 3, les moyens d'alimentation en air 15 de la chambre arrière 12 comportent une entrée d'air 15a ménagée dans la partie inférieure de la chambre arrière 12 et un clapet anti-retour 15b qui se positionne en ouverture automatique pour faire entrer l'air extérieur 15c dans la chambre arrière 12 sous l'effet de la dépression créée dans cette chambre arrière 12 lorsque le vérin est en phase de détente.

Les moyens d'évacuation 16 de l'air de la chambre avant 11 vers le réservoir 10 comportent une sortie d'air 16a ménagée dans la partie supérieure de la chambre avant 11, et un clapet anti-retour 16b qui se positionne en position d'ouverture automatique pour évacuer l'air de la chambre avant 11 dans un conduit 16c débouchant dans le réservoir 10 sous l'effet de la surpression créée dans cette chambre avant 11 lorsque le vérin est en phase de détente.

Ainsi, lorsque le vérin 2 est en phase de compression (figure 2), les moyens d'alimentation en air 13 de la chambre avant 11 et les moyens d'évacuation 14 de l'air de la chambre arrière 12 sont automatiquement activés tandis qu'à l'inverse, les moyens d'alimentation en air 15 de la chambre arrière 12 et les moyens d'évacuation 16 de l'air contenu dans la chambre avant 11 sont automatiquement désactivés. Ainsi, pendant la phase de compression, l'air de la chambre arrière 12 est envoyé vers le réservoir 10 pendant que la chambre avant 11 se remplit d'air en vue de la prochaine phase de détente.

De façon analogue, lorsque le vérin 2 est en phase de détente (figure 3), les moyens d'alimentation en air 15 de la chambre arrière 12 et les moyens d'évacuation 16 de l'air de la chambre avant 11 sont automatiquement activés tandis qu'à l'inverse, les moyens d'alimentation en air 13 de la chambre avant 11 et les moyens d'évacuation 14 de l'air contenu dans la chambre avant 12 sont automatiquement désactivés. Ainsi pendant la phase de détente, l'air de la chambre arrière 11 est envoyé dans le réservoir 10 pendant que la chambre arrière 12 se remplit d'air en vue de la prochaine phase de compression.

On comprend que le volume d'air envoyé dans le réservoir 10 au cours des phases de détente du vérin 2 sera inférieur au volume d'air envoyé dans le réservoir 10 au cours des phases de compression en raison de la présence de la tige de guidage 5 du piston 3 dans la chambre avant 11.

Mais avantageusement selon l'invention, le diamètre d de la tige de guidage 5 est déterminé en fonction de sa matière constitutive, de la longueur de la tige 5, de l'effort de rotation auquel la tige 5 est soumise et de l'implantation du vérin 2 relativement au bogie 9 et à la structure de caisse 7 du véhicule ferroviaire.

Concernant la matière constitutive de la tige, une tige de vérin est traditionnellement réalisée en acier. On peut néanmoins prévoir une tige en fibre de carbone permettant de réduire de 10 à 25% le diamètre de la tige pour un effort de rotation équivalent, ou encore une tige en nanotube de carbone permettant de réduire d'environ 35% le diamètre de tige.

Concernant le diamètre d de la tige 5, il a été évalué que pour une longueur de tige maximum de 350 millimètres, le diamètre d de la tige 5 est préférentiellement supérieur à 20 millimètres. Dans le cas d'une longueur de tige de 200 millimètres, le diamètre minimum d'une tige en acier doit être supérieur à 9,9 millimètres, le diamètre minimum d'une tige en fibre de carbone doit être supérieur à 7,5 millimètres et le diamètre minimum d'une tige en nanotube de carbone doit être supérieur à 6,5 millimètres.

Egalement, le diamètre intérieur D du tube du vérin 2 correspondant au diamètre du piston 3, est déterminé selon le volume disponible d'implantation du vérin 2 dans le système. A ce titre, le diamètre intérieur D du tube du vérin 2 est préférentiellement inférieur ou égal à 80 millimètres.

Une fois ces conditions limites environnementales déterminées respectivement pour le diamètre d de la tige de guidage 5 et pour le diamètre intérieur D du tube du vérin 2 correspondant au diamètre du piston 3, un rapport le plus grand possible sera choisi entre le diamètre intérieur D du tube du vérin et le diamètre d de la tige 5 afin d'éviter une trop grande différence de volume d'air envoyé dans le réservoir entre la phase de compression et la phase de détente.

Il a été évalué à cet effet que des conditions acceptables étaient obtenues pour un rapport de 2 entre le diamètre intérieur D du tube du vérin et le diamètre d de la tige 5. Un tel rapport entraîne une perte de rendement de 25% et une différence de volume d'air envoyé dans le réservoir d'air entre la chambre avant 11 et la chambre arrière 12 de 50%. On peut ainsi prévoir un rapport minimum de 1,5 entre le diamètre intérieur D du tube du vérin et le diamètre d de la tige 5.

Exemple de réalisation :

On considère un diamètre intérieur D du tube du vérin 2 correspondant au diamètre du piston 3, de 80 millimètres et un diamètre d de la tige de guidage 5 de 20 millimètres.

On a ainsi $D = 4d$.

En phase de compression, lorsque le piston 3 du vérin 2 effectue une course de longueur C, le volume d'air V envoyé dans le réservoir 10 s'exprime selon la relation suivante :

$$V = C\,\pi\,/\,4.(D^2 - d^2)$$

Avec $D = 4d$ on obtient $V = C.(\pi 15 d^2)/4$

Soit pour une course C de 10 millimètres, un volume d'air envoyé dans le réservoir de 47124 mm$^3$.

En phase de détente, lorsque le piston 3 effectue une course de longueur C, le volume d'air envoyé dans le réservoir s'exprime selon la relation suivante :

$$V = C\pi(D^2)/4$$

Avec $D = 4d$, on obtient $V = C.(\pi.16.d^2)/4$

Soit pour une course C de 10 millimètres, un volume d'air envoyé dans le réservoir de 50265mm$^3$.

On constate ainsi que si le volume d'air envoyé dans le réservoir lors de la phase de détente est inférieur au volume d'air envoyé dans le réservoir lors de la phase de compression mais que cette différence de volume est tout à fait minime.

En référence à la figure 1, le réservoir d'air 10 est relié à un clapet de surpression 21 pour éviter toute explosion du réservoir ainsi qu'à une vanne de débit proportionnel à commande directe 22 qui comprend un robinet pressostatique qui ne s'ouvre qu'à partir d'une pression seuil supérieure d'environ 9 bars, et se ferme à partir d'une pression seuil inférieure d'environ 4 bars.

La vanne de débit proportionnel 22 est reliée à un temporisateur pneumatique 23 jumelé avec un module de remise à zéro automatique 24 qui permettent d'alterner des phases de lubrification d'environ 3 à 4 secondes avec des phases de non lubrification d'environ 3 à 4 secondes nécessaires pour réarmer une pompe distributrice de lubrifiant 25 à laquelle le temporisateur 23 et le module de remise à zéro 24 sont reliés.

La pompe distributrice 25 est alimentée en lubrifiant par un réservoir de lubrifiant 26. Le transport du lubrifiant est assuré à l'aide d'air pressurisé provenant du réservoir 10 jusqu'à un diffuseur 27 qui envoie le même volume de lubrifiant à deux éjecteurs 28,29 situés à proximité des boudins de roues opposés d'un même essieu de bogie, comme il sera décrit plus loin.

Les éjecteurs 28,29 sont des éjecteurs connus tels que ceux utilisés dans les domaines de l'industrie (aciérie, papeterie), le bâtiment (camions, engins de travaux) et les transports (aéronautique, ferroviaire, routier).

L'orifice de sortie de ces éjecteurs est d'environ 1 millimètre ce qui permet de générer un effet Venturi pour assurer la pulvérisation du lubrifiant sur le boudin de roue concerné.

Le lubrifiant est un produit également connu sous forme d'huile ou de graisse. De préférence, le lubrifiant sera éco compatible c'est-à-dire biodégradable et non toxique en raison du fait que le lubrifiant pulvérisé n'est pas récupéré.

Ainsi, le système de lubrification de l'invention est autonome et ne nécessite aucune fourniture d'énergie du matériel ferroviaire puisque ce sont les mouvements relatifs du bogie 9 et de la structure de caisse du véhicule 7 qui vont entraîner le vérin 2 dans des phases alternatives de détente et de compression et permettre le remplissage du réservoir d'air 10.

Lorsque la pression du réservoir d'air 10 atteint la pression seuil d'environ 9 bars, la vanne 22 s'ouvre ce qui entraîne la lubrification par intermittence des boudins de roues non visibles sur cette figure.

Puis, la pression du réservoir d'air 10 diminue jusqu'à atteindre la pression seuil inférieure d'environ 4 bars, ce qui provoque la fermeture de la vanne 22 et l'arrêt de la lubrification jusqu'à ce que la pression du réservoir d'air atteigne de nouveau la pression seuil supérieure.

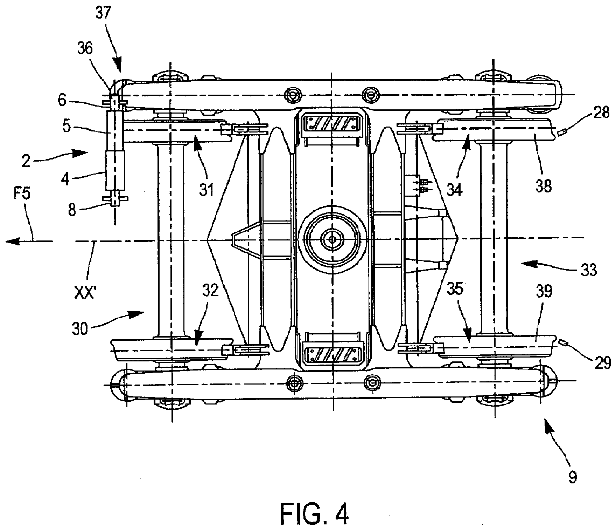

On se réfère à la figure 4 pour décrire le montage du système de lubrification de l'invention sur un bogie 9.

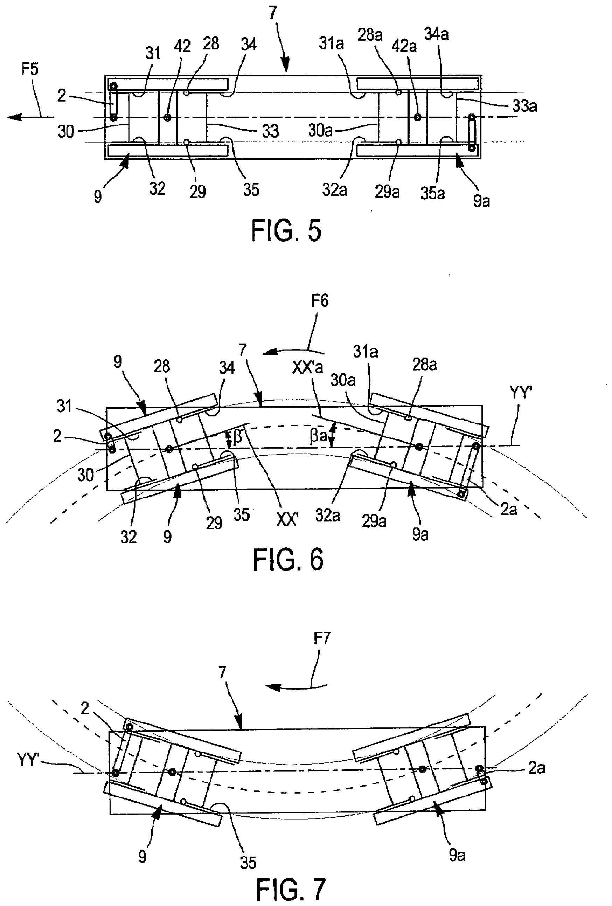

Les termes avant et arrière ainsi que les termes droite et gauche sont employés dans la description qui suit selon le sens de marche du bogie représenté schématiquement sur les figures 4 et 5 par la flèche F5, sur la figure 6 par la flèche F6 et sur la figure 7 par la flèche F7.

Le bogie 9 comporte un essieu avant 30 muni d'une roue avant droite 31 et d'une roue avant gauche 32, et un essieu arrière 33 muni d'une roue arrière droite 34 et d'une roue arrière gauche 35.

Le vérin 2 du système de lubrification de l'invention est situé au dessus de la roue avant droite 31 du bogie 9 en étant solidarisé au bogie 9 au niveau d'un point de fixation 36 situé à l'extrémité avant droite 37 du bogie 9. Le vérin 2 est disposé perpendiculairement à l'axe longitudinal XX' du bogie 9.

La position du vérin 2 au niveau d'une extrémité du bogie 9 est avantageuse pour le fonctionnement du système de lubrification de l'invention puisque c'est au niveau des extrémités avant et arrière du bogie que les déplacements transversaux relatifs du bogie et de la structure de caisse sont les plus importants, et qu'ainsi la course du piston 3 du vérin sera la plus importante, permettant d'envoyer un plus grand volume d'air dans le réservoir d'air 10 pour l'activation de la lubrification.

Sur cette figure, c'est l'extrémité 6 de la tige 5 du vérin 2 qui est solidarisée au bogie 9 et l'extrémité 8 du tube 4 du vérin 2 qui est solidarisée à la structure de caisse non visible. Mais il est possible de prévoir qu'à l'inverse, l'extrémité 6 de la tige 5 du vérin 2 soit solidarisée à la structure de caisse et que l'extrémité 8 du tube 4 du vérin 2 soit solidarisée au bogie 9.

La fixation du vérin 2 sur le bogie 9 et sur la structure de caisse est assurée au moyen d'embouts à rotule fixés sur la caisse et sur le bogie par l'intermédiaire soit d'une plaque en forme de fourchette, soit d'une plaque munie d'un axe.

L'utilisation d'embouts à rotule est recommandée au regard des angulations importantes entre le bogie et la structure de caisse.

Les embouts à rotules utilisés sont connus, et on utilisera notamment des embouts à rotules traversés par un axe qui est fileté à l'extrémité et de préférence équipé d'un soufflet de protection pour les protéger des pollutions extérieures.

On peut prévoir d'utiliser un embout à rotule en acier ou en caoutchouc de résistante suffisante si cette dernière peut admettre les angulations entre le bogie et la structure de caisse.

En référence à la figure 4, les éjecteurs 28, 29 sont disposés à proximités des boudins de roue 38,39 des roues respectivement arrière droite 34 et arrière gauche 35. Si leur implantation le permet, les éjecteurs 28,29 pourront être disposés à proximités des boudins de roue des roues respectivement avant droite 31 et avant gauche 32. Cette disposition a en outre l'avantage de réduire la longueur de tuyauterie nécessaire et la chute de pression provenant de cette longueur à parcourir dans l'air. Par ailleurs, les éjecteurs 28,29 sont orientés vers les boudins de roues conformément à la norme NF EN 15427 en la matière.

Cette configuration dans laquelle les éjecteurs 28,29 assurent la lubrification de roues droite et gauche permet d'assurer l'efficacité du système quelque soit le sens de marche du bogie 9.

Il a précédemment été décrit en référence à la figure 1 le fonctionnement du système de lubrification de l'invention généré par la course du piston du vérin provoquée par le déplacement relatif du bogie et de la structure de caisse.

La lubrification des boudins de roues est principalement nécessaire dans les courbes où certains boudins de roue des bogies génèrent un effort latéral important. Dans ces courbes, comme il sera vu plus loin, la course du piston du vérin 2 du système de lubrification de l'invention est telle que la pression du réservoir d'air 10 augmente rapidement pour permettre la lubrification. Mais dans les lignes droites ou à l'arrêt également, le bogie et la structure de caisse subissent des mouvements relatifs de plus faible amplitude qui permettent au réservoir d'air de commencer à se remplir, de façon que la lubrification puisse s'effectuer dès le début d'une courbe.

Parmi les mouvements relatifs du bogie et de la structure de caisse en ligne droite et à l'arrêt, on distingue les mouvements transversaux et les mouvements verticaux suivants :

- l'amortissement est un mouvement vertical généré par un changement d'altitude de la voie ferroviaire. La longueur de la course est de l'ordre de 10 millimètres mais peut être bien supérieure selon la masse de la structure de caisse et la nature des suspensions primaire et secondaire du véhicule ferroviaire. On estime que ce mouvement est généré sur un trajet pendant environ 60% du temps,
- les défauts de voie ferroviaire impliquent également des mouvements verticaux. La course de ce type de mouvement est de l'ordre de 2 millimètres et on estime que ce mouvement est généré sur un trajet pendant 5% du temps.
- A l'arrêt, le chargement et le déchargement du véhicule ferroviaire engendre aussi des mouvements verticaux. La course pour ce type de mouvement est de l'ordre de 40 millimètres mais cette course est là aussi très variable et influencée par les mêmes paramètres que pour l'amortissement vertical (masse de la structure de caisse et nature des suspensions primaire et secondaire du véhicule ferroviaire).
- Le tamisage est un mouvement transversal de la structure de caisse allant de droite à gauche. La course de ce type de mouvement est de l'ordre de 20 millimètres et on estime que ce mouvement est généré sur un trajet pendant 15% du temps.
- Le roulis est un mouvement de rotation de la structure de caisse autour de son axe longitudinal provenant le plus souvent d'une répartition hétérogène de la charge dans la structure de caisse. La course de ce type de mouvement est de l'ordre de 10 millimètres et on estime que ce mouvement est généré sur un trajet pendant 30% du temps.
- Enfin, le lacet de bogie et le lacet de caisse proviennent du jeu de quelques millimètres nécessaires entre les roues et les rails, lequel jeu provoque également des mouvements transversaux de la structure de caisse relativement au bogie. La course de ce type de mouvement est de l'ordre de 6 millimètres et on estime que ce mouvement est généré sur un trajet pendant 30% du temps.

Ces courses peuvent se produire indépendamment les unes des autres ou simultanément par deux ou trois. Par ailleurs, les courses et les pourcentages de réalisation de mouvements sont donnés à titre indicatif car conditionnés aux caractéristiques du véhicule ferroviaire.

Lorsque, comme représenté sur la figure 4, le vérin 2 du système de lubrification de l'invention est disposé parallèlement au plan du sol sur lequel circule le bogie 9, seuls les mouvements transversaux et les mouvements de lacets précédemment énumérés vont engendrer un déplacement du piston du vérin et donc permettre le remplissage préalable à une courbe du réservoir d'air.

En revanche, si on prévoit que le vérin 2, tout en restant perpendiculaire à l'axe longitudinal XX' du bogie 9, présente une certaine inclinaison par rapport à l'horizontal considérée comme une parallèle au plan du sol sur lequel circule le bogie 9, les mouvements transversaux et les mouvements verticaux de la structure de caisse relativement au bogie permettront le remplissage du réservoir d'air.

On prévoit ainsi avantageusement que le vérin 2 présente une angulation de 30° par rapport à l'horizontale. Avec cette configuration, un déplacement vertical de la structure de caisse relativement au bogie de 5 millimètres provoquera un déplacement du piston du vérin de 2,85 millimètres.

Si le réservoir d'air du système de lubrification de l'invention se remplit lors des mouvements transversaux et verticaux générés en ligne droite ou à l'arrêt, c'est dans les courbes que la course du piston du vérin sera la plus importante, provoquant ainsi le remplissage du réservoir d'air jusqu'à la pression seuil et la lubrification des boudins de roue concernés.

On se réfère aux figures 5 à 7 pour décrire une structure de caisse de véhicule ferroviaire selon l'invention qui peut être une voiture ou une remorque, dans le cadre du transport de voyageur, ou un wagon dans le cas du transport de marchandises.

Un bogie avant 9 et un bogie arrière 9a sont fixés sous la structure de caisse 7 du véhicule ferroviaire de l'invention. Les points de fixation 42,42a des bogies avant 9 et arrière 9a relativement à la structure de caisse 7 autorisent une certaine mobilité de ces bogies 9,9a relativement à la structure de caisse 7.

Le bogie avant 9 correspond au bogie de la figure 4 à savoir qu'il comporte un essieu avant 30 supportant la roue avant droite 31 et la roue avant gauche 32, et un essieu arrière 33 supportant la roue arrière droite 34 et la roue arrière gauche 35.

Le bogie arrière 9a comporte, de façon similaire, un essieu avant 30a supportant la roue avant droite 31a et la roue avant gauche 32a, et un essieu arrière 33a supportant la roue arrière droite 34a et la roue arrière gauche 35a.

Chaque bogie 9,9a comporte un système de lubrification de l'invention. Sur ces figures, seuls le vérin et les deux éjecteurs sont représentés pour des raisons de clarté.

En ce qui concerne le bogie avant 9, le vérin 2 est disposé au dessus de la roue avant droite 31 et les deux éjecteurs 28,29 sont respectivement situés au niveau des roues arrière droite 34 et arrière gauche 35.

Pour le bogie arrière 9a, le vérin 2a est situé au dessus de la roue arrière gauche 35a et les deux éjecteurs 28a, 29a sont respectivement disposés au niveau des roues avant droite 31a et avant gauche 32a.

Cette disposition symétrique du système de lubrification du bogie avant 9 et du système de lubrification du bogie arrière 9a permet avantageusement de pouvoir démonter un bogie 9,9a de la structure de caisse 7 pour le placer sur une autre structure de caisse tout en reproduisant la configuration décrite précédemment. Cette configuration permet également de lubrifier dans les courbes au moins un boudin de roue soumis à un effort latéral important.

A cet effet, en référence à la figure 6 qui représente la structure de caisse 7 dans une courbe à gauche selon la flèche F6, les angles respectifs β et βa entre les axes longitudinaux XX', XX'a des bogies avant 9 et arrière 9a et l'axe longitudinal YY' de la structure de caisse 7 sont tels que le vérin 2 du bogie avant 9 est en phase de compression tandis que le vérin 2a du bogie arrière 9a est en phase de détente.

La compression et la détente des deux vérins 2,2a provoque l'augmentation de la pression des réservoirs d'air respectifs non représentés et la lubrification des boudins de roues arrière droite 34 et arrière gauche 35 du bogie avant 9 et des boudins de roues avant droit 31a et avant gauche 32a du bogie arrière 9a.

Sur cette courbe à gauche, les roues qui sont le plus soumises à un effort latéral important sont les roues situées sur l'essieu avant respectif 30,30a des bogies avant et arrière 9,9a du coté extérieur au virage, à savoir la roue avant droite 31 du bogie avant 9 et la roue avant droite 31a du bogie arrière 9a.

Or, comme décrit précédemment, la roue avant droite 31a est bien lubrifiée par le système de lubrification de l'invention.

En référence à la figure 7, dans le cas d'un virage à droite selon la flèche F7, le vérin 2 du bogie avant 9 est en phase de détente tandis que le vérin 2a du bogie arrière est phase de compression. Dans cette configuration, ce sera la roue arrière gauche 35 du bogie avant 9 qui subit un effort latéral important qui bénéficiera de la pulvérisation du lubrifiant selon le système de l'invention.

Dans le cas non représenté d'une circulation à faible vitesse, les bogies ont tendance à se positionner en « crabe » de sorte que dans le cas d'un virage à gauche, quatre roues de la structure de caisse du véhicule ferroviaire subissent un effort latéral important à savoir la roue avant droite 31 et la roue arrière gauche 35 du bogie avant 9, ainsi que la roue avant droite 31a et la roue arrière gauche 35a du bogie arrière 9a. Selon le système de l'invention, la roue arrière gauche 35 du bogie avant 9 et la roue avant droite 31a du bogie arrière 9a bénéficieront de la pulvérisation de lubrifiant.

Dans le Tableau 1 ci-dessous, on a reporté à titre indicatif la course du vérin du système de lubrification de l'invention exprimée en millimètres, selon différents rayons de courbe et différents empattements et ce, pour un entraxe de bogie de 1800 millimètres et une implantation du vérin 2 à une distance de 1500 millimètres suivant l'axe XX' du point de fixation 42.

L'empattement est la distance entre les deux points de fixation 42,42a (figure 6) des bogies avant 9 et arrière 9a sur la structure de caisse 7, et l'entraxe est la distance entre les essieux avant 30 et arrière 33 d'un bogie 9.

Tableau 1

| Empattement (millimètres) | Rayon de courbe (mètres) | | | |
|---|---|---|---|---|
| | 1000 | 750 | 500 | 250 |
| 6460 | 6,2 | 8,3 | 12,4 | 24,8 |
| 9000 | 8,1 | 10,8 | 16,2 | 32,4 |
| 21200 | 17,25 | 23 | 34 | 69 |

Le système de lubrification de l'invention tel que précédemment décrit comporte deux éjecteurs situés au niveau des roues droite et gauche de l'essieu opposé à l'essieu au niveau duquel est monté le vérin, mais si l'environnement le permet, l'implantation des éjecteurs peut être réalisée au niveau des roues de l'essieu le plus proche du vérin.

On peut également prévoir, en restant dans le cadre de l'invention, que le système de lubrification comporte quatre éjecteurs de façon que chacune des roues d'un bogie bénéficie de la lubrification. Il faudra néanmoins s'assurer que la pression de pulvérisation reste suffisante pour satisfaire les besoins en lubrification de chaque roue. Dans ce cas, il sera possible de prévoir que le second bogie de la structure de caisse du véhicule ferroviaire ne comporte pas le système de lubrification de l'invention.

On peut également prévoir en alternative que la structure de caisse du véhicule ferroviaire comporte un seul système de lubrification de l'invention muni de deux éjecteurs, par exemple sur le bogie avant, et que le bogie arrière ne comporte pas le système de lubrification. De cette façon la lubrification des roues soumises à un effort latéral important est effectuée sur une roue sur deux comparée à l'exemple de réalisation décrit en référence aux figures 5 à 7 mais permet néanmoins de limiter les inconvénients liés à l'absence d'utilisation de lubrifiant ou à la nécessité d'alimenter en énergie un système de lubrification de l'art antérieur.

**Revendications**

1. Système de lubrification embarqué de boudin de roue de bogie de véhicule ferroviaire comprenant des moyens de projection d'un lubrifiant sur au moins un boudin de roue, **caractérisé en ce que** les dits moyens de projection (28,29 ;28a,29a) sont reliés à au moins un réservoir d'air (10) en communication avec un vérin pneumatique (2,2a) comportant une chambre avant (11) et une chambre arrière (12) et dont le déplacement du piston (3) est généré par les mouvements relatifs de la structure de caisse (7) du véhicule et du bogie (9) monté sur le dit véhicule, lequel déplacement du piston (3) engendre une alternance de phases de détente et de compression du vérin (2) qui provoquent le remplissage du réservoir d'air (10), **en ce qu'**il comporte des moyens d'alimentation en air (13) de la chambre avant (11) du vérin (2) et des moyens d'évacuation (14) de l'air contenu dans la chambre arrière (12) du vérin (2) vers le dit réservoir (10), lesquels moyens d'alimentation (13) et d'évacuation (14) sont activés lorsque le vérin (2) est en phase de compression, **en ce qu'**il comporte des moyens d'alimentation en air (15) de la chambre arrière (12) du vérin (2) et des moyens d'évacuation (16) de l'air contenu dans la chambre avant (11) du vérin (2) vers le dit réservoir (10), lesquels moyens d'alimentation (15) et d'évacuation (16) sont activés lorsque le vérin (2) est en phase de détente, et **en ce qu'**une vanne (22) est commandée en ouverture pour alimenter en air pressurisé les moyens de projection (28,28 ;28a,29a) lorsqu'une pression seuil est atteinte dans le réservoir d'air (10).

2. Système de lubrification selon la revendication 1, **caractérisé en ce que** :

   - les moyens d'alimentation en air (13) de la chambre avant (11) du vérin (2) comportent un clapet anti-retour (13b) par lequel de l'air est introduit automatiquement dans la chambre avant (11) du vérin (2) lorsque le vérin (2) est en phase de compression, et qui interdit l'évacuation de l'air contenu dans la chambre avant (11) vers l'extérieur lorsque le vérin (2) est en phase de détente,
   - les moyens d'alimentation en air (15) de la chambre arrière (12) du vérin (2) comportent un clapet anti-retour (15b) par lequel de l'air est introduit automatiquement dans la chambre arrière (12) du vérin (2) lorsque le vérin (2) est en phase de détente, et qui interdit l'évacuation de l'air contenue dans la chambre arrière (12) vers l'extérieur lorsque le vérin (2) est en phase de compression,
   - les moyens d'évacuation de l'air (14) contenu dans la chambre arrière (12) comportent un clapet anti-retour (14b) par lequel l'air contenu dans la chambre arrière (12) est automatiquement évacué vers le réservoir (10) lorsque le vérin (2) est en phase de compression, et qui interdit l'entrée de l'air du réservoir (10) dans la chambre arrière (12) lorsque le vérin (2) est en phase de détente et
   - les moyens d'évacuation de l'air (16) contenu dans la chambre avant (11) comportent un clapet anti-retour (16b) par lequel l'air contenu dans la chambre avant (11) est automatiquement évacué vers le réservoir (10) lorsque le vérin (2) est en phase de détente, et qui interdit l'entrée de l'air du réservoir (10) dans la chambre avant (11) lorsque le vérin (2) est en phase de compression.

3. Système selon l'une quelconque des revendications précédentes, **caractérisé en ce que** le piston (3) est guidé en coulissement dans le vérin (2) par une tige de guidage (5) dont le diamètre (d) est évalué selon principalement la longueur de la tige de guidage (5) qui résulte de l'implantation du vérin (2) sur la caisse du véhicule ferroviaire, le matériau constitutif de la tige de guidage (5) et l'effort de rotation auquel est soumis la tige de guidage (5).

4. Système selon l'une quelconque des revendications précédentes, **caractérisé en ce que** le diamètre (d) de la tige de guidage (5) est supérieur ou égal à 5 millimètres.

5. Système selon l'une quelconque des revendications 1 à 3, **caractérisé en ce que** le diamètre intérieur (D) du tube du vérin 2 correspondant au diamètre du piston (3) est au moins 1,5 fois supérieur au diamètre (d) de la tige de guidage (5).

6. Système selon l'une quelconque des revendications 4 et 5, **caractérisé en ce que** le diamètre (d) de la tige de guidage (5) est de 20 millimètres, et **en ce que** le diamètre intérieur (D) du tube du vérin (2) est de 80 millimètres.

7. Système de lubrification selon l'une quelconque des revendications précédentes, **caractérisé en ce que** le vérin (2,2a) est solidarisé d'une part au bogie (9,9a) du véhicule par l'extrémité libre (6) de la tige de guidage (5) du piston (3) du vérin (2,2a) ou par le tube (4) du vérin (2,2a), et d'autre part à la structure de caisse (7) du véhicule par le tube (4) du vérin (2,2a) ou par l'extrémité libre (6) de la tige de guidage (5) du piston (3) du vérin (2,2a).

8. Procédé de lubrification de boudin de roue de bogie de véhicule ferroviaire, **caractérisé en ce qu'**il comprend au moins les étapes :

   - d'alimentation en air d'un réservoir d'air (10) au moyen d'un vérin pneumatique (2,2a) dont le déplacement du piston (3) est généré par les mouvements relatifs de la structure de caisse (7) du véhicule et du bogie (9) monté sur le dit véhicule, cette alimentation en air du réservoir d'air (10) étant alternativement réalisée par :

     - l'alimentation en air de la chambre avant (11) du vérin (2) et l'évacuation concomitante de l'air contenu dans la chambre arrière (12) du vérin (2) vers le réservoir d'air (10) lorsque le vérin (2) est en phase de compression,
     - l'alimentation en air de la chambre arrière (12) du vérin (2) et l'évacuation concomitante de l'air contenu dans la chambre avant (11) du vérin (2) vers le réservoir d'air (10) lorsque le vérin (2) est en phase de détente.

     - d'ouverture de la vanne 22 lorsqu'une pression seuil est atteinte dans le réservoir d'air (10) et d'alimentation concomitante en air pressurisée de moyens de projection d'un lubrifiant sur au moins un boudin de roue (34,35).

9. Bogie de véhicule ferroviaire comportant un essieu arrière et un essieu avant, **caractérisé en ce qu'**il comporte au moins un système de lubrification selon l'une quelconque des revendications 1 à 7 qui comprend deux éjecteurs de lubrifiant (28,29) et pour lequel une première extrémité (6,8) du vérin (2,2a) est solidarisée au bogie (9,9a) au dessus d'une roue (31) d'un premier essieu avant (30) ou arrière (33a) au niveau de la partie d'extrémité avant (37) ou arrière de ce bogie (9,9a), l'extrémité opposée (6,8) du vérin (2,2a) étant solidarisée à la structure de caisse (7) du véhicule ferroviaire, et **en ce que** les deux éjecteurs (28,29 ;28a,29a) sont respectivement orientés vers les boudins de roues droit (38) et gauche (39) du second essieu avant (30a) ou arrière (33).

10. Véhicule ferroviaire comportant au moins une structure de caisse, **caractérisé en ce que** la dite structure de caisse (7) comprend un bogie avant (9) et un bogie arrière (9a) et **en ce qu'**au moins le bogie avant (9) ou le bogie arrière (9) est selon la revendication 9.

**Patentansprüche**

1. Eingebautes Schmiersystem eines Spurkranzes eines Drehgestells eines Schienenfahrzeugs, umfassend Sprühmittel eines Schmierstoffs auf mindestens einen Spurkranz, **dadurch gekennzeichnet, dass** die Sprühmittel (28, 29; 28a, 29a) mit mindestens einem Luftbehälter (10) in Kommunikation mit einem Pneumatikzylinder (2, 2a) verbunden sind, der eine vordere Kammer (11) und eine hintere Kammer (12) aufweist und bei dem die Verlagerung des Kolbens (3) von den relativen Bewegungen der Wagenkastenstruktur (7) des Fahrzeugs und des an dem Fahrzeug angebrachten Drehgestells (9) erzeugt wird, wobei die Verlagerung des Kolbens (3) abwechselnde Phasen der Entspannung und der Kompression des Zylinders (2) erzeugt, welche zum Füllen des Luftbehälters (10) führen, dass es Luftversorgungsmittel (13) der vorderen Kammer (11) des Zylinders (2) und Ableitungsmittel (14) der in der hinteren Kammer (12) des Zylinders (2) enthaltenen Luft in den Behälter (10) aufweist, wobei die Versorgungsmittel (13) und Ableitungsmittel (14) aktiviert sind, wenn der Zylinder (2) in Kompressionsphase ist, dass es Luftversorgungsmittel (15) der hinteren Kammer (12) des Zylinders (2) und Ableitungsmittel (16) der in der vorderen Kammer (11) des Zylinders (2) enthaltenen Luft in den Behälter (10) aufweist, wobei die Versorgungsmittel (15) und Ableitungsmittel (16) aktiviert sind, wenn der Zylinder (2) in Entspannungsphase ist, und dass ein Ventil (22) geöffnet wird, um die Sprühmittel (28, 28; 28a, 29a) mit Druckluft zu versorgen, wenn in dem Luftbehälter (10) ein Grenzwertdruck erreicht ist.

2. Schmiersystem nach Anspruch 1, **dadurch gekennzeichnet, dass**:

   - die Luftversorgungsmittel (13) der vorderen Kammer (11) des Zylinders (2) ein Rückschlagventil (13b) aufweisen, durch welches Luft in die vordere Kammer (11) des Zylinders (2) automatisch eingeleitet wird, wenn der Zylinder (2) in Kompressionsphase ist, und das die Ableitung der in der vorderen Kammer (11) enthaltenen Luft nach außen verhindert, wenn der Zylinder (2) in Entspannungsphase ist,

- die Luftversorgungsmittel (15) der hinteren Kammer (12) des Zylinders (2) ein Rückschlagventil (15b) aufweisen, durch welches Luft in die hintere Kammer (12) des Zylinders (2) automatisch eingeleitet wird, wenn der Zylinder (2) in Entspannungsphase ist, und das die Ableitung der in der hinteren Kammer (12) enthaltenen Luft nach außen verhindert, wenn der Zylinder (2) in Kompressionsphase ist,

- die Ableitungsmittel (14) der in der hinteren Kammer (12) enthaltenen Luft ein Rückschlagventil (14b) aufweisen, durch welches die in der hinteren Kammer (12) enthaltene Luft automatisch in den Behälter (10) abgeleitet wird, wenn der Zylinder (2) in Kompressionsphase ist, und das den Eintritt von Luft aus dem Behälter (10) in die hintere Kammer (12) verhindert, wenn der Zylinder (2) in Entspannungsphase ist, und

- die Ableitungsmittel (16) der in der vorderen Kammer (11) enthaltenen Luft ein Rückschlagventil (16b) aufweisen, durch welches die in der vorderen Kammer (11) enthaltene Luft automatisch in den Behälter (10) abgeleitet wird, wenn der Zylinder (2) in Entspannungsphase ist, und das den Eintritt von Luft aus dem Behälter (10) in die vordere Kammer (11) verhindert, wenn der Zylinder (2) in Kompressionsphase ist.

3. System nach einem der vorangehenden Ansprüche, **dadurch gekennzeichnet, dass** der Kolben (3) in dem Zylinder (2) von einer Führungsstange (5) gleitend geführt wird, deren Durchmesser (d) hauptsächlich von der Länge der Führungsstange (5) abhängt, die sich aus dem Sitz des Zylinders (2) auf dem Wagenkasten des Schienenfahrzeugs, dem Werkstoff, der die Führungsstange (5) bildet, und der Rotationskraft, welcher die Führungsstange (5) ausgesetzt ist, ergibt.

4. System nach einem der vorangehenden Ansprüche, **dadurch gekennzeichnet, dass** der Durchmesser (d) der Führungsstange (5) größer oder gleich 5 Millimeter beträgt.

5. System nach einem der Ansprüche 1 bis 3, **dadurch gekennzeichnet, dass** der Innendurchmesser (D) des Rohrs des Zylinders 2, der dem Durchmesser des Kolbens (3) entspricht, mindestens 1,5 Mal größer als der Durchmesser (d) der Führungsstange (5) ist.

6. System nach einem der Ansprüche 4 und 5, **dadurch gekennzeichnet, dass** der Durchmesser (d) der Führungsstange (5) 20 Millimeter beträgt, und dass der Innendurchmesser (D) des Rohrs des Zylinders (2) 80 Millimeter beträgt.

7. Schmiersystem nach einem der vorangehenden Ansprüche, **dadurch gekennzeichnet, dass** der Zylinder (2, 2a) zum einen mit dem Drehgestell (9, 9a) des Fahrzeugs durch das freie Ende (6) der Führungsstange (5) des Kolbens (3) des Zylinders (2, 2a) oder durch das Rohr (4) des Zylinders (2, 2a) und zum anderen mit der Wagenkastenstruktur (7) des Fahrzeugs durch das Rohr (4) des Zylinders (2, 2a) oder durch das freie Ende (6) der Führungsstange (5) des Kolbens (3) des Zylinders (2, 2a) fest verbunden ist.

8. Schmierverfahren eines Spurkranzes eines Drehgestells eines Schienenfahrzeugs, **dadurch gekennzeichnet, dass** es mindestens die Schritte umfasst:

- Versorgen eines Luftbehälters (10) mit Luft mittels eines Pneumatikzylinders (2, 2a), bei dem die Verlagerung des Kolbens (3) von den relativen Bewegungen der Wagenkastenstruktur (7) des Fahrzeugs und des an dem Fahrzeug angebrachten Drehgestells (9) erzeugt wird, wobei diese Luftversorgung des Luftbehälters (10) abwechselnd durchgeführt wird durch:

- die Versorgung der vorderen Kammer (11) des Zylinders (2) mit Luft und die begleitende Ableitung der in der hinteren Kammer (12) des Zylinders (2) enthaltenen Luft in den Luftbehälter (10), wenn der Zylinder (2) in Kompressionsphase ist,

- die Versorgung der hinteren Kammer (12) des Zylinders (2) mit Luft und die begleitende Ableitung der in der vorderen Kammer (11) des Zylinders (2) enthaltenen Luft in den Luftbehälter (10), wenn der Zylinder (2) in Entspannungsphase ist,

- Öffnen des Ventils 22, wenn ein Grenzwertdruck in dem Luftbehälter (10) erreicht ist, und begleitendes Versorgen von Sprühmitteln eines Schmierstoffs auf mindestens einem Spurkranz (34, 35) mit Druckluft.

9. Drehgestell eines Schienenfahrzeugs, aufweisend eine hintere Achse und eine vordere Achse, **dadurch gekennzeichnet, dass** es mindestens ein Schmiersystem nach einem der Ansprüche 1 bis 7 aufweist, das zwei Schmierstoffausleger (28, 29) umfasst und für das ein erstes Ende (6, 8) des Zylinders (2, 2a) mit dem Drehgestell (9, 9a) über einem Rad (31) einer ersten vorderen (30) oder hinteren (33a) Achse im Bereich des vorderen (37) oder hinteren Endabschnitts dieses Drehgestells (9, 9a) fest verbunden ist, wobei das entgegengesetzte Ende (6, 8) des Zylinders (2, 2a) mit der Wagenkastenstruktur (7) des Schienenfahrzeugs fest verbunden ist, und dass die zwei Auswerfer (28, 29; 28a, 29a) jeweils in Richtung des rechten (38) und linken (39) Spurkranzes der zweiten vorderen (30a) oder hinteren (33) Achse ausgerichtet sind.

10. Schienenfahrzeug, aufweisend mindestens eine Wagenkastenstruktur, **dadurch gekennzeichnet, dass** die Wagenkastenstruktur (7) ein vorderes Drehgestell (9) und ein hinteres Drehgestell (9a) umfasst und dass mindestens das vordere Drehgestell (9) oder das hintere Drehgestell (9) nach Anspruch 9 ist.

**Claims**

1. Embedded system for lubricating the wheel flange of a rail vehicle bogie comprising means for spraying a lubricant onto at least one wheel flange, **characterized in that** said spraying means (28, 29; 28a, 29a) are linked to at least one air tank (10) connected with a pneumatic cylinder (2, 2a) comprising a front chamber (11) and a rear chamber (12) and the displacement of the piston (3) of which is generated by the relative movements of the body structure (7) of the vehicle and of the bogie (9) mounted on said vehicle, which displacement of the piston (3) generates an alternation of phases of expansion and compression of the cylinder (2) which provoke the filling of the air tank (10), **in that** it comprises means (13) for supplying air to the front chamber (11) of the cylinder (2) and means (14) for discharging the air contained in the rear chamber (12) of the cylinder (2) to said tank (10), which supply (13) and discharge (14) means are activated when the cylinder (2) is in compression phase, and **in that** it comprises means (15) for supplying air to the rear chamber (12) of the cylinder (2) and means (16) for discharging the air contained in the front chamber (11) of the cylinder (2) to said tank (10), which supply (15) and discharge (16) means are activated when the cylinder (2) is in expansion phase, and **in that** a valve (22) is commanded to open to supply pressurized air to the spraying means (28, 29; 28a, 29a) when a threshold pressure is reached in the air tank (10).

2. Lubrication system according to Claim 1, **characterized in that**:

   - the means (13) for supplying air to the front chamber (11) of the cylinder (2) comprise a non-return valve (13b) through which air is introduced automatically into the front chamber (11) of the cylinder (2) when the cylinder (2) is in compression phase, and which prevents the discharge of the air contained in the front chamber (11) to the outside when the cylinder (2) is in expansion phase,
   - the means (15) for supplying air to the rear chamber (12) of the cylinder (2) comprise a non-return valve (15b) through which air is introduced automatically into the rear chamber (12) of the cylinder (2) when the cylinder (2) is in expansion phase, and which prevents the discharge of the air contained in the rear chamber (12) to the outside when the cylinder (2) is in compression phase,
   - the means (14) for discharging the air contained in the rear chamber (12) comprise a non-return valve (14b) through which the air contained in the rear chamber (12) is automatically discharged to the tank (10) when the cylinder (2) is in compression phase, and which prevents the entry of the air from the tank (10) into the rear chamber (12) when the cylinder (2) is in expansion phase, and
   - the means (16) for discharging the air contained in the front chamber (11) comprise a non-return valve (16b) through which the air contained in the front chamber (11) is automatically discharged to the tank (10) when the cylinder (2) is in expansion phase, and which prevents the entry of the air from the tank (10) into the front chamber (11) when the cylinder (2) is in compression phase.

3. System according to either one of the preceding claims, **characterized in that** the piston (3) is guided in sliding in the cylinder (2) by a guiding rod (5) whose diameter (d) is assessed primarily according to the length of the guiding rod (5) which results from the locating of the cylinder (2) on the body of the rail vehicle, the constituent material of the guiding rod (5) and the rotational force to which the guiding rod (5) is subjected.

4. System according to any one of the preceding claims **characterized in that** the diameter (d) of the guiding rod (5) is greater than or equal to 5 millimetres.

5. System according to any one of Claims 1 to 3, **characterized in that** the inner diameter (D) of the tube of the cylinder (2) corresponding to the diameter of the piston (3) is at least 1.5 times greater than the diameter (d) of the guiding rod (5).

6. System according to either one of Claims 4 and 5, **characterized in that** the diameter (d) of the guiding rod (5) is 20 millimetres, and **in that** the inner diameter (D) of the tube of the cylinder (2) is 80 millimetres.

7. Lubrication system according to any one of the preceding claims, **characterized in that** the cylinder (2, 2a) is secured on the one hand to the bogie (9, 9a) of the vehicle by the free end (6) of the guiding rod (5) of the piston (3) of the cylinder (2, 2a) or by the tube (4) of the cylinder (2, 2a), and on the other hand to the body structure (7) of the vehicle by the tube (4) of the cylinder (2, 2a) or by the free end (6) of the guiding rod (5) of the piston (3) of the cylinder (2, 2a).

8. Method for lubricating the wheel flange of a rail vehicle bogie, **characterized in that** it comprises at least the steps:

   - of supplying air to an air tank (10) by means of a pneumatic cylinder (2, 2a), the displacement of the piston (3) of which is generated by the relative movements of the body structure (7) of the vehicle and of the bogie (9) mounted on said vehicle, this supply of air to the air tank (10) being alternately produced by:

      - the supply of air to the front chamber (11) of the cylinder (2) and the concomitant discharging of the air contained in the rear chamber (12) of the cylinder (2) to the air tank (10) when the cylinder (2) is in compression phase,
      - the supply of air to the rear chamber (12) of the cylinder (2) and the concomitant discharging of the air contained in the front chamber (11) of the cylinder (2) to the air tank (10) when the cylinder (2) is in expansion phase,

      - of opening of the valve (22) when a threshold pressure is reached in the air tank (10) and of concomitant supply of pressurized air to means for spraying a lubricant onto at least one wheel flange (34, 35).

9. Rail vehicle bogie comprising a rear axle and a front axle, **characterized in that** it comprises at least one lubrication system according to any one of Claims 1 to 7 which comprises two ejectors of lubricant (28, 29) and for which a first end (6, 8) of the cylinder (2, 2a) is secured to the bogie (9, 9a) above a wheel (31) of a first front (30) or rear (33a) axle at the front or rear end part (37) of this bogie (9, 9a), the opposite end (6, 8) of the cylinder (2, 2a) being secured to the body structure (7) of the rail vehicle, and **in that** the two ejectors (28, 29; 28a, 29a) are respectively oriented towards the right (38) and left (39) wheel flanges of the second front (30a) or rear (33) axle.

10. Rail vehicle comprising at least one body structure, **characterized in that** said body structure (7) comprises a front bogie (9) and a rear bogie (9a) and **in that** at least the front bogie (9) or the rear bogie (9) is in accordance with Claim 9.

FIG. 1

FIG. 2          FIG. 3

FIG. 4

FIG. 5

FIG. 6

FIG. 7

**EP 2 781 427 B1**

**RÉFÉRENCES CITÉES DANS LA DESCRIPTION**

**Documents brevets cités dans la description**

• FR 2938043